# FASCICULE DE BREVET EUROPEEN

(11) **EP 0 734 107 B1**
(45) Date de publication et mention de la délivrance du brevet: **20.09.2000**
(21) Numéro de dépôt: 96400581.3
(22) Date de dépôt: 20.03.1996
(51) Int. Cl.: H02G 3/06, H02G 3/04

(54) **Pièce de raccordement pour accessoire d'angle pour conduit électrique et accessoire d'angle comportant au moins une telle pièce de raccordement**
Winkelzubehörverbindungselement für Elektrokanal und Winkelzubehör dafür
Angle accessory fastening device for electrical channel and associated accessory

(30) Priorité: 21.03.1995 FR 9503273
(43) Date de publication de la demande: 25.09.1996
(73) Titulaire: PLANET WATTOHM, 60303 Senlis Cedex (FR)
(72) Inventeur: Thirouin, Stéphane, 60300 Senlis (FR); Albert, Christophe, 60300 Senlis (FR)
(74) Mandataire: CABINET BONNET-THIRION

(56) Documents cités:
- FR-A- 2 431 209
- GB-A- 1 207 564

## Description

La présente invention concerne d'une manière générale les conduits électriques, à corps et couvercle(s), du type de ceux destinés à être mis en oeuvre en saillie sur un quelconque support, en pratique un mur ou une cloison, pour la fixation et le logement de quelconques appareillages électriques, tels que prises de courant ou autres, ainsi que pour le logement et la protection des conducteurs électriques nécessaires à la desserte de ceux-ci.

Elle vise plus particulièrement l'accessoire d'angle qu'il est usuel de mettre en oeuvre pour le raccordement l'un à l'autre de deux tels conduits électriques lorsque ceux-ci sont chacun respectivement implantés sur deux supports faisant un angle entre eux.

Lorsqu'il s'agit de murs ou cloisons, cet angle est normalement de 90°.

Mais, indépendamment des bâtiments anciens, dans lesquels des irrégularités plus ou moins prononcées peuvent être constatées, il existe à ce sujet une certaine tolérance, de l'ordre de quelques degrés.

Il en résulte, pour l'installateur, à la pose, des difficultés.

Si, par exemple, l'accessoire d'angle à mettre en oeuvre est un accessoire monobloc, qui, par construction, correspond rigidement à un angle donné, en pratique un angle de 90°, et si, conjointement, l'angle à équiper correspond, en sus ou en moins, à une valeur différente, l'accessoire d'angle ne peut pas s'adapter à la fois parfaitement à l'un et à l'autre des deux éléments qu'il a à charge de raccorder, en sorte que, pour l'un au moins de ces éléments, il subsiste, entre lui et celui-ci, un certain interstice, au détriment aussi bien de l'esthétique que de la continuité de la protection recherchée.

Conjointement, l'accessoire d'angle ne peut pas non plus s'adapter parfaitement sur toute sa longueur aux supports concernés, en sorte qu'il subsiste également un certain interstice entre eux et lui.

Des difficultés du même ordre se retrouvent si, au lieu d'être monobloc, l'accessoire d'angle est préassemblé, que l'assemblage correspondant se fasse en atelier, ce qui est le cas pour les accessoires d'angle communément dits "chaudronnés", ou que cet assemblage se fasse sur le chantier.

Il n'est pas rare, dans tous les cas, d'observer dans ces conditions des casses à la pose, si, lors de celle-ci, l'accessoire d'angle est soumis à une contrainte trop accentuée pour tenter d'en améliorer les conditions d'adaptation.

Pour pallier ces difficultés, il a été proposé, sous le nom, généralement, d"'angles variables", des accessoires d'angle formés de deux pièces, qui, articulées l'une à l'autre, se chevauchent plus ou moins l'une l'autre pour s'adapter à la valeur de l'angle à équiper.

Mais, du fait même de la surépaisseur due au chevauchement de ces deux pièces, ces accessoires d'angle sont le plus souvent peu esthétiques.

La présente invention a d'une manière générale pour objet une disposition permettant d'éviter de manière très simple les difficultés précédentes.

De manière plus précise, elle a tout d'abord pour objet une pièce de raccordement du genre comportant une paroi de raccordement par deux extrémités opposées de laquelle elle est apte à recouvrir les extrémités de deux éléments à raccorder, qu'il s'agisse par exemple des couvercles des deux conduits électriques concernés ou qu'il s'agisse des ailes latérales du corps de ceux-ci ou de parements rapportés sur ces ailes latérales, cette pièce de raccordement étant d'une manière générale avec, à l'une au moins des extrémités de cette paroi de raccordement, des moyens de dégagement, caractérisée en ce que, pour conférer une capacité d'angulation aux éléments à raccorder, les moyens de dégagement ont, en section longitudinale, c'est-à-dire suivant la direction d'engagement des éléments à raccorder, un contour globalement trapézoïdal ; elle a encore pour objet tout accessoire d'angle comportant au moins une telle pièce de raccordement.

Par exemple, pour la constitution des moyens de dégagement suivant l'invention, la paroi de raccordement présente, intérieurement, en creux, un dégagement.

En variante, cette paroi de raccordement comporte, en saillie en porte à faux sur sa surface interne, une patte, qui, pour la constitution de moyens de dégagement, s'étend en biais, en se rapprochant de cette surface interne de sa racine à son extrémité libre.

Quoi qu'il en soit, grâce au contour globalement trapézoïdal de ces moyens de dégagement, l'un et/ou l'autre des deux éléments à raccorder peuvent, si nécessaire, s'engager plus ou moins en biais dans la pièce de raccordement qui les relie, sans qu'il en résulte corollairement l'établissement d'un interstice entre eux et celle-ci.

En effet, par la capacité d'angulation qu'ils confèrent, ces moyens de dégagement permettent un pivotement des éléments à raccorder autour de l'arête interne du bord de recouvrement correspondant de la paroi de raccordement de la pièce de raccordement, sans que, nécessairement, il y ait une quelconque perte de contact avec cette arête.

Ainsi, toute la continuité souhaitable se trouve avantageusement préservée à l'entrée dans la pièce de raccordement de l'un et de l'autre des deux éléments à raccorder.

Certes, il est prévu, dans le brevet britannique No 1 207 564, une pièce de raccordement présentant, aux extrémités d'une paroi de raccordement, des moyens de dégagement dans lesquels s'engagent les éléments à raccorder.

Mais ces moyens de dégagement ne confèrent aucune capacité d'angulation à ces éléments.

Il n'en est pas de même avec les moyens de dégagement suivant l'invention.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un accessoire d'angle formé de pièces de raccordement suivant l'invention et des deux conduits électriques entre lesquels il est établi, lorsque l'angle à équiper est un angle extérieur, c'est-à-dire un angle saillant ;
la figure 2 est, déduite de la figure 1, une vue en perspective éclatée de l'ensemble, avec un arrachement local et avec la suppression de certains des constituants des deux conduits électriques concernés ;
la figure 3 est, à échelle différente, une vue de dessus, suivant la flèche III de la figure 2, d'une des pièces de raccordement concernées ;
la figure 4 est une vue de côté de cette pièce de raccordement, suivant la flèche IV de la figure 3 ;
les figures 5 et 6 reprennent, chacune respectivement, à échelle supérieure, les détails de la figure 3 repérés par des encarts V et VI sur cette figure 3 ;
la figure 7 est, à échelle différente, et suivant la ligne VII-VII de la figure 2, une vue en coupe d'une autre des pièces de raccordement concernées ;
la figure 8 est une vue de côté de cette autre pièce de raccordement, suivant la flèche VIII de la figure 7 ;
la figure 9 reprend, à échelle supérieure, le détail de la figure 7 repéré par un encart IX sur cette figure 7 ;
les figures 10A, 10B, 10C sont des vues qui, reprenant celle de la figure 5, illustrent chacune respectivement diverses possibilités de mise en oeuvre de la pièce de raccordement en cause ;
les figures 11A, 11B, 11C sont des vues qui, reprenant celle de la figure 9, illustrent de façon semblable diverses possibilités de mise en oeuvre de la pièce de raccordement concernée ;
la figure 12 est une vue en perspective analogue à celle de la figure 1, pour une variante de réalisation de l'accessoire d'angle suivant l'invention correspondant au cas où l'angle à équiper est un angle intérieur, c'est-à-dire un angle rentrant ;
la figure 13 est, déduite de la figure 12, une vue en perspective éclatée de même type que celle de la figure 2 pour cette variante de réalisation ;
la figure 14 est, à échelle différente, et suivant la flèche XIV de la figure 13, une vue de dessus d'une des pièces de raccordement correspondantes ;
la figure 15 est, suivant la flèche XV de la figure 12, une vue de face d'une autre de ces pièces de raccordement ;
la figure 16 est une vue de dessus de cette autre pièce de raccordement, suivant la flèche XVI de la figure 15 ;
la figure 17 est, supposée développée à plat, une vue de dessus d'un fond également mis en oeuvre dans le cas d'un tel angle intérieur ;
la figure 18 reprend à à échelle supérieure, et avec un arrachement, le détail de la figure 17 repéré par un encart XVIII sur cette figure 17 ;
la figure 19 est une vue qui, analogue à celle de la figure 9, se rapporte à une autre variante de réalisation.

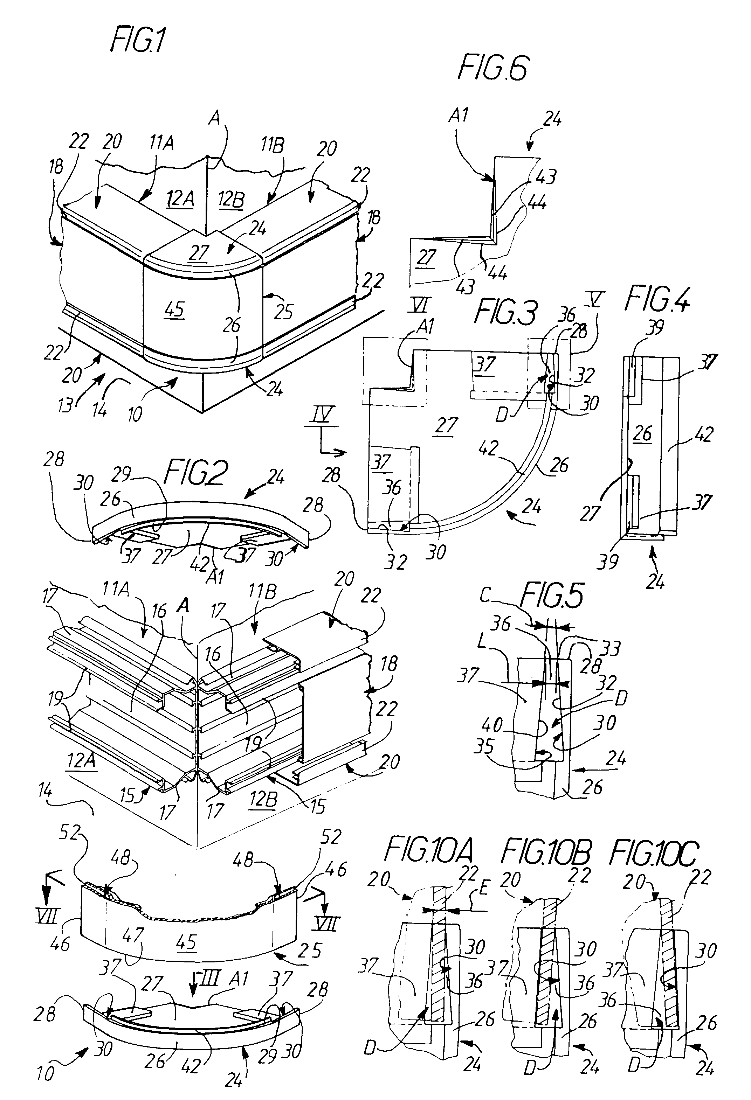

Tel qu'illustré sur la figure 1, il s'agit, globalement, d'assurer, par un accessoire d'angle 10, le raccordement l'un à l'autre de deux conduits électriques 11A, 11B qui sont chacun respectivement implantés sur deux supports 12A, 12B faisant un angle A entre eux.

Il s'agit, en l'espèce, de deux murs ou cloisons d'un même local 13.

Les conduits électriques 11A, 11B sont généralement identiques entre eux ; c'est le cas, en pratique, dans la forme de mise en oeuvre représentée sur la figure 1.

Dans cette forme de mise en oeuvre, les conduits électriques 11A, 11B s'étendent horizontalement, à distance du sol 14 du local 13, mais, en variante, ils pourraient tout aussi bien s'étendre en plinthe à proximité immédiate de ce sol 14.

En outre, dans cette forme de mise en oeuvre, l'angle A à équiper est, à titre d'exemple, un angle extérieur, c'est-à-dire un angle saillant.

Les conduits électriques 11A, 11B ne relevant pas, par eux-mêmes, de la présente invention, ils ne seront pas décrits dans tous leurs détails ici.

Dans la forme de réalisation représentée, il s'agit, à titre d'exemple, de conduits électriques monocompartimentaux comportant, globalement, ainsi qu'il apparaît mieux sur la figure 2, d'une part, un corps 15, à fond 16 et ailes latérales 17, et, d'autre part, un couvercle 18, qui, par emboîtement et/ou encliquetage, est rapporté de manière amovible sur des retours en équerre 19 prévus à cet effet le long du bord libre des ailes latérales 17 du corps 15.

En outre, dans la forme de réalisation représentée, il est rapporté, extérieurement, sur chacune des ailes latérales 17 du corps 15, par emboîtement et/ou encliquetage, un parement 20 comportant, en façade, suivant sensiblement le plan général du couvercle 18, un retour en équerre 22.

Les conduits électriques 11A, 11B ainsi constitués sont appliqués, et dûment assujettis, à leurs supports 12A, 12B par le fond 16 de leur corps 15.

Lorsqu'ils sont établis en plinthe, celui des parements 20 qui est le plus proche du sol 14 peut si désiré être remplacé par une bavette, non représentée, qui est apte à former un joint avec ce sol 14, et à laquelle il est alors associé, en façade, au lieu et place du retour en équerre 22, une baguette formant enjoliveur, également non représentée.

Les dispositions correspondantes ne relevant pas de la présente invention, elles ne seront pas décrites plus en détail ici.

Suivant des dispositions décrites plus en détail ultérieurement, l'accessoire d'angle 10 met globalement en oeuvre au moins une pièce de raccordement comportant une paroi de raccordement par deux extrémités opposées de laquelle elle est apte à recouvrir les extrémités de deux éléments à raccorder.

Dans la forme de réalisation représentée, l'accessoire d'angle 10 met en pratique en oeuvre trois pièces de raccordement, à savoir, d'une part, deux pièces de raccordement 24, qui interviennent latéralement, en raccordant chacune respectivement deux parements 20, et, d'autre part, une pièce de raccordement 25, qui intervient entre les deux précédentes, en raccordant deux couvercles 18.

Les deux pièces de raccordement 24 sont identiques l'une à l'autre.

Elles comportent chacune en façade une paroi de raccordement 26, qui s'étend de l'un à l'autre des deux retours en équerre 22 des parements 20 concernés, en recouvrant légèrement chacun de ceux-ci à ses extrémités, et qui, en pratique, forme un bord tombé s'étendant en bordure d'un flasque 27, qui, lui, intervient latéralement, suivant le plan général des parements 20, en recouvrant légèrement chacun de ceux-ci à ses extrémités.

Lorsque, comme représenté sur la figure 1, l'angle A à équiper est un angle extérieur, la paroi de raccordement 26 s'étend circulairement suivant un quart de cercle, et, à l'opposé de celle-ci, le flasque 27 forme un angle A1 qui, globalement complémentaire de l'angle A, est donc un angle intérieur, c'est-à-dire un angle rentrant.

Dans la forme de réalisation représentée, le flasque 27, qui se raccorde par un congé arrondi à la paroi de raccordement 26, est globalement plat, à l'image des parements 20.

Mais, en variante, il peut être plus ou moins bombé, suivant le profil de ceux-ci.

Globalement, la paroi de raccordement 26 comporte, transversalement, à ses extrémités, des bords de recouvrement 28, par lesquels elle s'engage sur les retours en équerre 22 des parements 20, et, courant longitudinalement d'un de ces bords de recouvrement 28 à l'autre, en bordure de la pièce de raccordement 25, un bord libre 29.

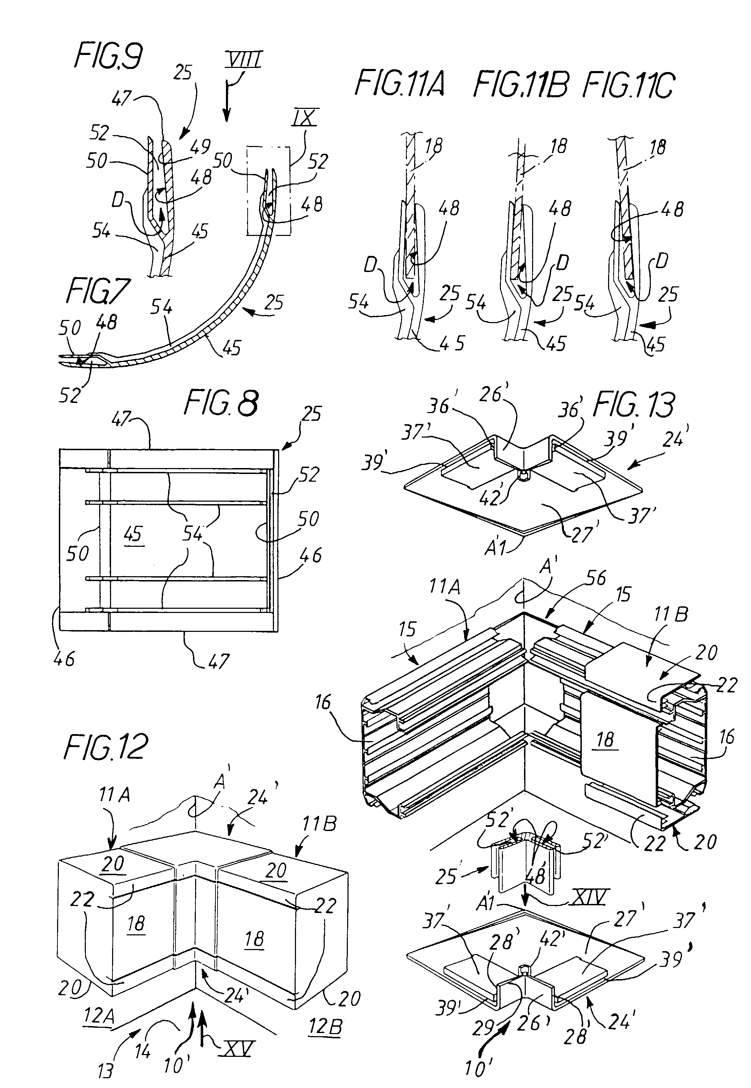

Suivant l'invention, cette paroi de raccordement 26 comporte des moyens de dégagement D, qui, pour conférer une capacité d'angulation aux éléments à raccorder, en l'espèce les retours en équerre 22 des parements 20, ont, en section transversale, c'est-à-dire suivant la direction d'engagement de ces éléments, et, donc, suivant le plan des figures 5, 10A, 10B et 19C, un contour globalement trapézoïdal.

Dans la forme de réalisation plus particulièrement représentée sur les figures 1 à 11, la paroi de raccordement 26 présente, intérieurement, en creux, à l'une au moins de ses extrémités, et, en pratique, à chacune de celles-ci, pour la constitution des moyens de dégagement D, un dégagement 30.

En pratique, ce dégagement 30 débouche latéralement, sur le bord libre 29, et, ainsi qu'il est mieux visible sur les figures 3 et 5, son fond 32 s'étend globalement en oblique de l'une à l'autre de ses extrémités, en sorte que l'épaisseur de la paroi de raccordement 26 est moindre à celle de ces extrémités qui est la plus éloignée de son bord de recouvrement 28 qu'à celle qui en est la plus proche.

En pratique, également, le fond 32 du dégagement 30 est issu de l'arête interne 33 de la tranche de la paroi de raccordement 26 formant son bord de recouvrement 28, et il s'étend continûment de manière plane, mais en oblique, à compter de cette arête interne 33.

Dans la forme de réalisation représentée, chacune des pièces de raccordement 24 comporte, en outre, sur sa face interne, une contre-paroi 35, qui, associée à sa paroi de raccordement 26, s'étend au moins localement au droit du dégagement 30 de celle-ci, en ménageant avec cette paroi de raccordement 26 une fente 36 propre à un engagement sur l'élément à raccorder, en l'espèce un parement 20, ou, plus précisément, le retour en équerre 22 d'un tel parement 20.

Préférentiellement, la largeur L de cette fente 36 à son débouché, c'est-à-dire à son débouché sur le bord de recouvrement 28, est sensiblement égale à l'épaisseur E de l'élément à raccorder, en l'espèce, donc, le retour en équerre 22 d'un parement 20, tout en étant préférentiellement légèrement inférieure à cette épaisseur E de manière à assurer un certain pincement à ce niveau de nature à y limiter au mieux les jeux usuels.

En pratique la largeur de la fente 36 va globalement en augmentant, de part et d'autre, à compter de son débouché sur le bord de recouvrement 28.

Ainsi, à compter de ce débouché, la fente 36 forme globalement un divergent d'angle C.

La valeur de cet angle C est fonction de l'épaisseur de la paroi de raccordement 26 et de la longueur de la fente 36.

Cet angle C est en pratique compris entre 4° et 6°, en étant par exemple voisin de 5°.

Quoi qu'il en soit, la fente 36 forme alors par elle-même les moyens de dégagement D.

Dans la forme de réalisation représentée, la contre-paroi 35 est formée par la tranche latérale d'une patte 37 en saillie en porte à faux sur la surface interne du flasque 27.

Cette patte 37 s'étend globalement parallèlement au flasque 27, le long du bord de celui-ci, en formant elle-même avec ce flasque 27 une fente 39 propre à un engagement sur l'élément à raccorder, en l'espèce un parement 20, et il y a ainsi une patte 37 à chacune des extrémités de la paroi de raccordement 26.

Les deux pattes 37 que comporte donc une pièce de raccordement 24 s'étendent chacune respectivement suivant des directions orthogonales l'une par rapport à l'autre.

Corollairement, à chacune des extrémités de la paroi de raccordement 26, la fente 36 résulte, en pratique, d'une part, du dégagement 30 présent à cet effet en creux sur la paroi de raccordement 26, et, d'autre part, d'un dégagement 40 également prévu à cet effet, en creux, et de manière symétrique par rapport au dégagement 30, sur la tranche de la patte 37 correspondante.

Dans la forme de réalisation représentée, la paroi de raccordement 26 des pièces de raccordement 24 présente localement, entre ses extrémités, en saillie sur son bord libre 29, une jupe 42, qui, intervenant en retrait vers l'intérieur, forme avec elle une feuillure, pour l'emboîtement, et l'appui, de la pièce de raccordement 25.

En pratique, cette jupe 42 s'étend de l'un à l'autre des fonds des fentes 36.

Préférentiellement, l'angle A1 que forme le flasque 27 des pièces de raccordement 24 est différent de 90°, en étant supérieur à 90° lorsque, comme cela est le cas sur la figure 1, l'angle A à équiper, dont il est globalement complémentaire, est un angle extérieur, et, sur un côté au moins, il est flanqué latéralement d'au moins une zone prédécoupée 43, 44 propre à permettre d'en modifier par élimination la valeur.

Dans la forme de réalisation représentée, deux zones prédécoupées 43, 44 successives sont prévues de chaque côté, la première correspondant exactement à une valeur de 90°, et la deuxième à une valeur inférieure à 90°.

Suivant le cas, l'angle A1 est laissé tel quel, ou l'une et/ou l'autre des zones prédécoupées 43, 44 sont éliminées, pour l'adaptation à faire à l'angle A à équiper.

Dans la forme de réalisation représentée, la pièce de raccordement 25 se réduit extérieurement à une paroi de raccordement 45, qui s'étend circulairement suivant un quart de cercle, en présentant, transversalement, à ses extrémités, des bords de recouvrement 46, avec, longitudinalement, entre ceux-ci, deux bords libres 47.

Comme précédemment, cette paroi de raccordement 45 présente, intérieurement, en creux, à l'une au moins de ses extrémités, et en pratique à chacune de celles-ci, un dégagement 48, qui débouche latéralement sur chacun des bords libres 47, et dont le fond 49 s'étend de manière plane, mais en oblique.

Comme précédemment, également, la pièce de raccordement 25 présente, sur sa face interne, une contre-paroi 50 qui, associée à sa paroi de raccordement 45, ménage avec celle-ci, à chacune de ses extrémités, une fente 52 dont la largeur, sensiblement égale, à son débouché, à l'épaisseur de l'élément à raccorder, en l'espèce un couvercle 18, tout en étant légèrement supérieure à cette épaisseur, va en augmentant de part et d'autre à compter de ce débouché.

Comme précédemment, enfin, l'ensemble forme des moyens de dégagement D de contour globalement trapézoïdal.

Dans la forme de réalisation représentée, la contre-paroi 50 est directement en saillie en porte à faux sur la surface interne de la paroi de raccordement 45, elle présente des extrémités qui sont en retrait par rapport aux bords libres 47 de celle-ci, et elle est renforcée à son dos par au moins une nervure 54.

En pratique, plusieurs nervures 54 sont prévues, de place en place, et, d'une contre-paroi 50 à l'autre, celles-ci se poursuivent sur la surface interne de la paroi de raccordement 45.

Si les deux supports 12A, 12B sont rigoureusement d'équerre l'un par rapport à l'autre, c'est-à-dire si l'angle A qu'ils forment est rigoureusement égal à 90°, les retours en équerre 22 des parements 20 s'engagent droit dans les fentes 36 des pièces de raccordement 24, tel que schématisé en traits interrompus pour l'un d'eux sur la figure 10A.

S'il n'en est pas ainsi, ils s'inclinent plus ou moins dans ces fentes 36, suivant que l'angle A a une valeur supérieure à 90°, figure 10B, ou inférieure à 90°, figure 10C.

La capacité d'angulation correspondante est autorisée par l'évasement des moyens de dégagement D que constituent ces fentes 36, et, plus particulièrement, lorsque l'angle A a une valeur supérieure à 90°, par les dégagements 30 de la paroi de raccordement 26.

Ainsi que l'illustrent les figures 11A, 11B, 11C, il en est de même pour les couvercles 18 vis-à-vis de la pièce de raccordement 25.

Les figures 13 à 18 se rapportent au cas où l'angle A' à équiper est un angle intérieur, c'est-à-dire un angle rentrant.

Des dispositions du même type que les précédentes sont alors retenues.

Par mesure de simplicité, elles ne seront pas décrites dans tous leurs détails ici.

Il suffira d'indiquer que, sur les figures, les pièces de même type que les précédentes ont reçu des références identiques affectées de l'indice "'".

L'accessoire d'angle 10' ainsi mis en oeuvre comporte donc, comme précédemment, trois pièces de raccordement, à savoir deux pièces de raccordement 24' et une pièce de raccordement 25'.

La paroi de raccordement 26' des pièces de raccordement 24' forme globalement un dièdre droit, et, à son opposé, le flasque 27' qu'elle borde forme un angle A'1 qui, différent de 90°, est en pratique inférieur à 90° et est flanqué latéralement de zones prédécoupées 43', 44' propres à permettre d'en modifier la valeur.

De même, la pièce de raccordement 25' forme pour l'essentiel une paroi de raccordement 45' qui, elle aussi, constitue un dièdre globalement droit.

Pour le reste, et comme déjà indiqué, les dispositions sont de même type que celles précédemment décrites.

Mais, en sus, il est prévu une pièce de fond 56 pour raccorder l'un à l'autre les fonds 16 du corps 15 des conduits électriques 11A, 11B.

Cette pièce de fond 56 présente, dans sa zone médiane, une zone de moindre épaisseur 57 qui, formant charnière, permet de la plier globalement en équerre, suivant la valeur de l'angle A' à équiper.

Elle comporte en outre des prolongements prédécoupés 58, permettant d'en ajuster la longueur si nécessaire.

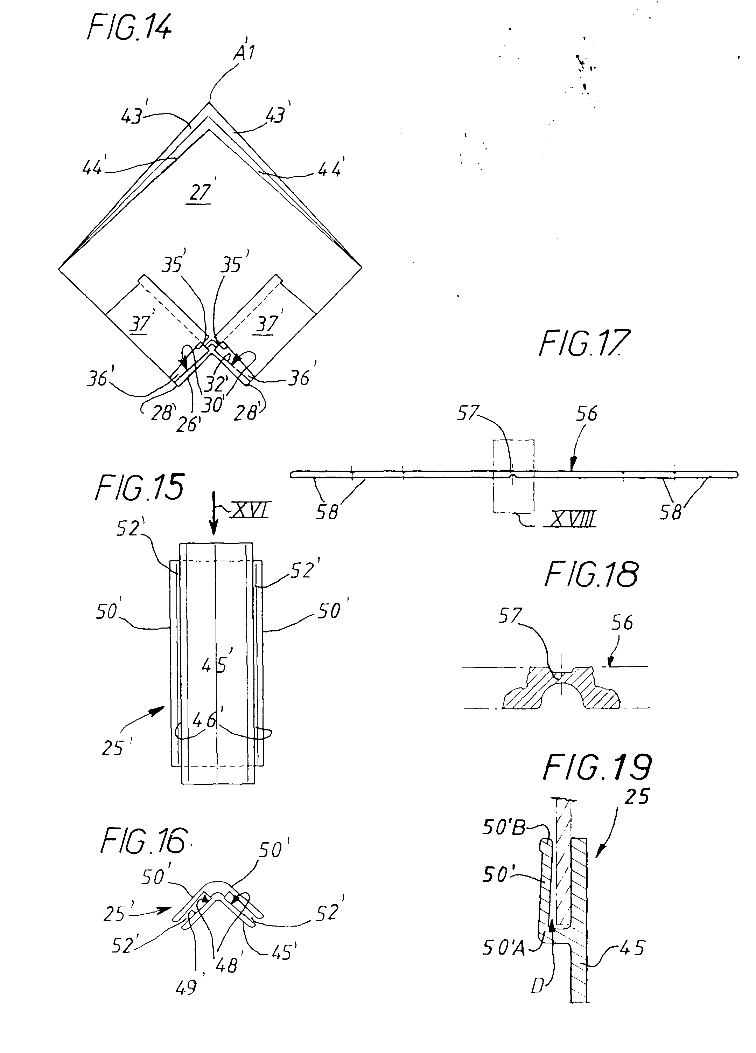

Dans la variante de réalisation représentée sur la figure 19, la paroi de raccordement 45 de la pièce de raccordement 25 conserve une épaisseur uniforme à son extrémité.

Mais elle comporte, en saillie en porte à faux sur sa surface interne, à la manière de la contre-paroi 50 précédente, une patte 50', qui, pour la constitution des moyens de dégagement D suivant l'invention, s'étend en biais par rapport à elle, en se rapprochant de sa surface interne de sa racine 50'A à son extrémité libre 50'B.

Comme précédemment, les moyens de dégagement D ainsi formés ont, en section longitudinale, un contour globalement trapézoïdal.

Si désiré, un léger jeu peut en outre être prévu au débouché de la fente formant ces moyens de dégagement D.

Bien entendu, la présente invention ne se limite pas aux formes de réalisation décrites et représentées, mais englobe toute variante d'exécution et/ou de combinaison de leurs divers éléments dans le cadre des revendications.

En outre, son domaine d'application n'est pas limité à celui des seuls conduits électriques monocompartimentaux, mais s'étend au contraire aussi bien à celui des conduits électriques multicompartimentaux, c'est-à-dire à celui des conduits électriques dont le corps présente une ou plusieurs cloisons entre ses ailes latérales, avec, par exemple, un couvercle par compartiment ainsi délimité.

De même sont tout aussi bien concernés les conduits électriques sur les ailes latérales du corps desquels il n'est pas rapporté de parement.

## Revendications

1. Pièce de raccordement pour accessoire d'angle pour conduit électrique du genre comportant une paroi de raccordement (26, 45, 26', 45') par deux extrémités opposées de laquelle elle est apte à recouvrir les extrémités de deux éléments à raccorder, avec, à l'une au moins des extrémités de cette paroi de raccordement (26, 45, 26', 45'), des moyens de dégagement (D), caractérisé en ce que, pour conférer une capacité d'angulation aux éléments à raccorder, les moyens de dégagement (D) ont, en section longitudinale, c'est-à-dire suivant la direction d'engagement des éléments à raccorder, un contour globalement trapézoïdal.

2. Pièce de raccordement suivant la revendication 1, caractérisée en ce que, pour la constitution de moyens de dégagement (D), la paroi de raccordement (26, 45, 26', 45') présente, intérieurement, en creux, un dégagement (30, 48, 30', 48').

3. Pièce de raccordement suivant la revendication 2, caractérisée en ce que le dégagement (30, 48, 30', 48') de la paroi de raccordement (26, 45, 26', 45') débouche latéralement.

4. Pièce de raccordement suivant l'une quelconque des revendications 2, 3, caractérisée en ce que le fond (32, 49, 32', 49') du dégagement (30, 48, 30', 48') de la paroi de raccordement (26, 45, 26', 45') s'étend globalement en oblique de l'une à l'autre de ses extrémités, en sorte que l'épaisseur de ladite paroi de raccordement (26, 45, 26', 45') est moindre à celle de ces extrémités qui est la plus éloignée de son bord de recouvrement (28, 46, 28', 46') qu'à celle qui en est la plus proche.

5. Pièce de raccordement suivant la revendication 4, caractérisée en ce que le fond (32, 49, 32', 49') du dégagement (30, 48, 30', 48') de la paroi de raccordement (26, 45, 26', 45') est issu de l'arête interne (33) de la tranche de ladite paroi de raccordement (26, 45, 26', 45') formant son bord de recouvrement (28, 46, 28', 46').

6. Pièce de raccordement suivant l'une quelconque des revendications 2 à 5, caractérisée en ce qu'elle comporte, sur sa face interne, une contre-paroi (35, 50, 35', 50'), qui, associée à sa paroi de raccordement (26, 45, 26', 45'), s'étend au moins localement au droit du dégagement (30, 48, 30', 48') de celle-ci, en ménageant avec cette paroi de raccordement (26, 45, 26', 45') une fente (36, 52, 36', 52') propre à un engagement sur l'élément à raccorder.

7. Pièce de raccordement suivant la revendication 6, caractérisée en ce que la largeur (L) de ladite fente (36, 52, 36', 52') à son débouché est sensiblement égale à l'épaisseur (E) de l'élément à raccorder tout en étant légèrement supérieure à cette épaisseur (E).

8. Pièce de raccordement suivant l'une quelconque des revendications 6, 7, caractérisée en ce que la largeur de ladite fente (36, 52, 36', 52') va globalement en augmentant de part et d'autre à compter de son débouché.

9. Pièce de raccordement suivant l'une quelconque des revendications 6 à 8, caractérisée en ce que, la paroi de raccordement (26, 26') formant un bord tombé en bordure d'un flasque (27, 27'), la contre-paroi (35, 35') est formée par la tranche latérale d'une patte (37, 37') en saillie en porte à faux sur la surface interne dudit flasque (27, 27').

10. Pièce de raccordement suivant la revendication 9, caractérisée en ce que, entre ses extrémités, la paroi de raccordement (26, 26') présente localement, en saillie sur son bord libre, une jupe (42, 42'), qui, intervenant en retrait vers l'intérieur, forme avec elle une feuillure.

11. Pièce de raccordement suivant l'une quelconque des revendications 9, 10, caractérisée en ce que, à l'opposé de la paroi de raccordement (26, 26'), le flasque (27, 27') forme un angle (A1, A'1), qui, différent de 90°, est flanqué latéralement d'au moins une zone prédécoupée (43, 44, 43', 44') propre à permettre d'en modifier la valeur.

12. Pièce de raccordement suivant l'une quelconque des revendications 6 à 8, caractérisée en ce qu'elle se réduit extérieurement à une paroi de raccordement (45, 45') et la contre-paroi (50, 50') qu'elle comporte est en saillie en porte à faux sur la surface interne de celle-ci.

13. Pièce de raccordement suivant la revendication 12, caractérisée en ce que la contre-paroi (50) est renforcée par au moins une nervure (54).

14. Pièce de raccordement suivant la revendication 1, caractérisée en ce que la paroi de raccordement (45, 45') comporte, en saillie en porte à faux sur sa surface interne, une patte (50'), qui, pour la constitution de moyens de dégagement (D), s'étend en biais, en se rapprochant de ladite surface interne de sa racine (50'A) à son extrémité libre (50'B).

15. Accessoire d'angle pour conduit électrique, du genre mis en oeuvre pour le raccordement l'un à l'autre de deux conduits électriques qui sont chacun respectivement implantés sur deux supports faisant un angle entre eux, caractérisé en ce qu'il met en oeuvre au moins une pièce de raccordement (24, 25, 24', 25') suivant l'une quelconque des revendications 1 à 14.

## Patentansprüche

1. Winkelzubehörverbindungsstück für einen Elektrokanal von der Sorte, die eine Verbindungswand (26, 45, 26', 45') umfaßt, die derart ausgelegt ist, durch zwei entgegengesetzte Enden derselben die Enden von zwei zu verbindenden Elementen abzudecken, mit Aufnahmemitteln (D) an zumindest dem einen der Enden dieser Verbindungswand (26, 45, 26', 45'),
dadurch gekennzeichnet,
daß die Aufnahmemittel (D), um den zu verbindenden Elementen eine Winkelanpassungsfähigkeit zu verleihen, im Längsschnitt, d. h. in der Eingriffsrichtung der zu verbindenden Elemente, eine im wesentlichen trapezförmige Kontur aufweisen.

2. Verbindungsstück nach Anspruch 1,
dadurch gekennzeichnet,
daß die Verbindungswand (26, 45, 26', 45') zur Bildung der Aufnahmemittel (D) innen eine vertiefte Aufnahme (30, 48, 30', 48') aufweist.

3. Verbindungsstück nach Anspruch 2,
dadurch gekennzeichnet,
daß die Aufnahme (30, 48, 30', 48') der Verbindungswand (26, 45, 26', 45') seitlich offen ist.

4. Verbindungsstück nach einem der Ansprüche 2 oder 3,
dadurch gekennzeichnet,
daß die Rückwand (32, 49, 32', 49') der Aufnahme (30, 48, 30', 48') der Verbindungswand (26, 45, 26', 45') sich im wesentlichen schräg von dem einen zu dem anderen ihrer Enden erstreckt, derart, daß die Dicke der Verbindungswand (26, 45, 26', 45') an demjenigen ihrer Enden, das das am weitesten entfernte von ihrer Überdeckungskante (28, 46, 28', 46') ist, kleiner ist als an demjenigen, das dieser am nächsten ist.

5. Verbindungsstück nach Anspruch 4,
dadurch gekennzeichnet,
daß die Rückwand (32, 49, 32', 49') der Aufnahme (30, 48, 30', 48') der Verbindungswand (26, 45, 26', 45') von dem inneren Abschluß (33) des Abschnittes der Verbindungswand (26, 45, 26', 45') ausgeht, der ihre Überdeckungskante (28, 46, 28', 46') bildet.

6. Verbindungsstück nach einem der Ansprüche 2 bis 5,
dadurch gekennzeichnet,
daß es auf seiner Innenfläche eine Gegenwand (35, 50, 35', 50') umfaßt, die seiner Verbindungswand (26, 45, 26', 45') zugeordnet ist und sich zumindest stellenweise auf der Höhe von der Aufnahme (30, 48, 30', 48') von dieser erstreckt, wobei sie mit dieser Verbindungswand (26, 45, 26', 45') einen Spalt (36, 52, 36', 52') bildet, der zum Eingriff auf dem zu verbindenden Element geeignet ist.

7. Verbindungsstück nach Anspruch 6,
dadurch gekennzeichnet,
daß die Breite (L) des Spaltes (36, 52, 36', 52') an seinem Ausgang im wesentlichen gleich der Dicke (E) des zu verbindenden Elementes ist, wobei sie jedoch geringfügig größer als diese Dicke (E) ist.

8. Verbindungsstück nach einem der Ansprüche 6 oder 7,
dadurch gekennzeichnet,
daß die Breite des Spaltes (36, 52, 36', 52') ab seinem Ausgang beiderseits im wesentlichen zunimmt.

9. Verbindungsstück nach einem der Ansprüche 6 bis 8,
dadurch gekennzeichnet,
daß die Verbindungswand (26, 26') eine abfallende Kante als Umrandung eines Flansches (27, 27') bildet, wobei die Gegenwand (35, 35') durch den seitlichen Abschnitt eines Lappens (37, 37') gebildet ist, der abgesetzt auf der Innenfläche des Flansches (27, 27') vorspringt.

10. Verbindungsstück nach Anspruch 9,
dadurch gekennzeichnet,
daß die Verbindungswand (26, 26') zwischen ihren Enden stellenweise von ihrer freien Kante vorspringend eine Schürze (42, 42') aufweist, die nach innen zurückversetzt eingreift und mit dieser einen Falz bildet.

11. Verbindungsstück nach einem der Ansprüche 9 oder 10,
dadurch gekennzeichnet,
daß der Flansch (27, 27') gegenüber der Verbindungswand (26, 26') einen Winkel (A1, A'1) bildet, der von 90° verschieden ist und seitlich von zumindest einem vorgeschnittenen Bereich (43, 44, 43', 44') flankiert ist, der geeignet ist, dessen Wert zu verändern.

12. Verbindungsstück nach einem der Ansprüche 6 bis 8,
dadurch gekennzeichnet,
daß es sich außen zu einer Verbindungswand (45, 45') verringert, und die Gegenwand (50, 50'), die sie umfaßt, von der Innenfläche derselben abgesetzt vorspringt.

13. Verbindungsstück nach Anspruch 12,
dadurch gekennzeichnet,
daß die Gegenwand (50) durch zumindest eine Rippe (54) verstärkt ist.

14. Verbindungsstück nach Anspruch 1,
dadurch gekennzeichnet,
daß die Verbindungswand (45, 45') abgesetzt auf ihrer Innenfläche vorspringend einen Lappen (50') umfaßt, der sich zur Bildung von Aufnahmemitteln (D) schräg von seinem Ansatz (50'A) zu seinem freien Ende (50'B) erstreckt, wobei er sich der Innenfläche annähert,.

15. Winkelzubehör für einen Elektrokanal von der Sorte, die zur Verbindung des einen mit dem anderen von zwei Elektrokanälen verwendet wird, die jeweils auf zwei Trägern aufgebaut sind, die einen Winkel zwischen sich bilden,
dadurch gekennzeichnet,
daß es zumindest ein Verbindungsstück (24, 25, 24', 25') gemäß einem der Ansprüche 1 bis 14 verwendet.

## Claims

1. A connecting part for an angle accessory for an electrical conduit of the kind comprising a connecting wall (26, 45, 26', 45'), by way of two opposite ends of which it is capable of covering the ends of two elements to be connected, with, at one at least of the ends of said connecting wall (26, 45, 26', 45'), recess means (D) characterised in that, to impart an angulation capacity to the elements to be connected, the recess means (D) are of a generally trapezoidal contour in longitudinal section, that is to say in the direction of engagement of the elements to be connected.

2. A connecting part according to claim 1 characterised in that, to constitute recess means (D), the connecting wall (26, 45, 26', 45') has internally in hollowed relation a recess (30, 48, 30', 48').

3. A connecting part according to claim 2 characterised in that the recess (30, 48, 30', 48') of the connecting wall (26, 45, 26', 45') opens laterally.

4. A connecting part according to either one of claims 2 and 3 characterised in that the bottom (32, 49, 32', 49') of the recess (30, 48, 30', 48') of the connecting wall (26, 45, 26', 45') extends generally inclinedly from one of its ends to the other in such a way that the thickness of said connecting wall (26, 45, 26', 45') is less at that of those ends which is more remote from its overlap edge (28, 46, 28', 46') than at that which is closer thereto.

5. A connecting part according to claim 4 characterised in that the bottom (32, 49, 32', 49') of the recess (30, 48, 30', 48') of the connecting wall (26, 45, 26', 45') extends from the internal edge (33) of the end face of said connecting wall (26, 45, 26', 45') forming its overlap edge (28, 46, 28', 46').

6. A connecting part according to any one of claims 2 to 5 characterised in that on its internal face it comprises an oppositely disposed wall (35, 50, 35', 50') which, associated with its connecting wall (26, 45, 26', 45'), extends at least locally in line with the recess (30, 48, 30', 48') thereof, forming with said connecting wall (26, 45, 26', 45') a slot (36, 52, 36', 52') for engagement on the element to be connected.

7. A connecting part according to claim 6 characterised in that the width (L) of said slot (36, 52, 36', 52') at its mouth opening is substantially equal to the thickness (E) of the element to be connected while being slightly greater than said thickness (E).

8. A connecting part according to either one of claims 6 and 7 characterised in that the width of said slot (36, 52, 36', 52') is of a generally increasing nature on respective sides from the mouth opening thereof.

9. A connecting part according to any one of claims 6 to 8 characterised in that, the connecting wall (26, 26') forming a flanged rim portion at the edge of a plate portion (27, 27'), the oppositely disposed wall (35, 35') is formed by the side face of a tongue (37, 37') in projecting cantilever relationship on the internal surface of said plate portion (27, 27').

10. A connecting part according to claim 9 characterised in that, between its ends, the connecting wall (26, 26') locally has in projecting relationship on its free edge a skirt (42, 42') which, extending in inwardly set-back relationship, forms therewith a groove.

11. A connecting part according to either one of claims 9 and 10 characterised in that, opposite to the connecting wall (26, 26'), the plate portion (27, 27') forms an angle (A1, A'1) which, being different from 90°, is laterally flanked by at least one pre-cut-out region (43, 44, 43', 44') to permit the value thereof to be altered.

12. A connecting part according to any one of claims 6 to 8 characterised in that it is externally reduced to a connecting wall (45, 45') and the oppositely disposed wall (50, 50') that it comprises is in projecting cantilever relationship on the internal surface thereof.

13. A connecting part according to claim 12 characterised in that the oppositely disposed wall (50) is reinforced by at least one rib (54).

14. A connecting part according to claim 1 characterised in that the connecting wall (45, 45') comprises, in projecting cantilever relationship on its internal surface, a tongue (50') which, to form recess means (50), extends inclinedly, moving closer towards said internal surface from its root (50'A) to its free end (50'B).

15. An angle accessory for an electrical conduit of the type used for connecting together two electrical conduits which are each respectively fitted to two supports forming an angle to each other, characterised in that it uses at least one connecting part (24, 25, 24', 25') according to any one of claims 1 to 14.
